# EUROPEAN PATENT SPECIFICATION

(11) **EP 3 782 751 B1**
(45) Date of publication and mention of the grant of the patent: **29.05.2024**
(21) Application number: 19192904.1
(22) Date of filing: 21.08.2019
(51) Int. Cl.: B23C 5/08, B23C 5/26, B23C 5/28

(54) **A MILLING CUTTER**
FRÄSWERKZEUG
FRAISE

(43) Date of publication of application: 24.02.2021
(73) Proprietor: Seco Tools AB, 737 82 Fagersta (SE)
(72) Inventor: Duchalais, Julien, 18000 BOURGES (FR); VINCENT, Mathieu, 18000 Bourges (FR)
(74) Representative: Sandvik

(56) References cited:
- EP-A1- 3 321 018
- DE-A1-102007 001 864
- DE-A1-102017 131 001
- US-A1- 2002 106 251

## Description

### TECHNICAL FIELD OF THE INVENTION

The present invention refers generally to a milling cutter to be attached to a machine or to a holder, and comprising two parts, a front end part and a back end part mounted and locked to each other to form the milling cutter. More specifically, the present invention refers to a milling cutter according to the preamble of claim 1.

### BACKGROUND AND PRIOR ART

US 2002/0106251 A1 discloses a milling cutter according to the preamble of claim 1.

DE 101 45 006 A1 discloses a cooling system for a disc cutter with a holder forming a disc-shaped cutter body for a plurality changeable cutting inserts. There are coolant outlet apertures in the holder, through which coolant may be supplied to the cutting inserts. Coolant transporting channels are provided in the holder for the passage of the coolant. The holder comprises an engagement member extending rearwards from a rear side of the disc-shaped cutter body. The engagement member comprises a central recess for engagement with a machine or holder.

A problem of the prior art is the requirement of an accurate centering and holding of the disc-shaped cutter body. A high accuracy may be difficult to achieve with the disc cutter of DE 101 45 006. An exact centering and rigid holding of the disc-shaped cutter body is required in order to achieve a satisfying accuracy of the milling operation.

A further problem is to provide an efficient cooling of the disc-shaped cutter body and the cutting inserts in order to maintain the lifetime of the tool. The supply of cooling liquid is an intricate task since the disc-shaped cutter bodies normally have a thin thickness.

In the prior art disc-shaped cutter bodies, the liquid channels for the cooling frequently cannot extend straight but at least one change of direction is needed in order to be able to deliver the cooling liquid at an outer periphery of the disc-shaped cutter body, see DE 101 45 006.

A still further problem is the manufacturing of the disc-shaped cutter body and the insert seats, especially insert seats extending through the rear side of the disc-shaped cutter body.

### SUMMARY OF THE INVENTION

The purpose of the present invention is to overcome the problems discussed above, and in particular to provide an improved centering and holding of a milling cutter having a disc-shaped cutter body. Furthermore, it is aimed at an efficient cooling of the milling cutter and the cutting inserts in order to maintain and improve the lifetime of the tool as well as an efficient chip evacuation from the groove that is to be machined in the workpiece. Still further, it is aimed at a structure of a milling cutter having a disc-shaped cutter body that enables an easy and efficient manufacturing of the milling cutter, and especially of the insert seats and of the liquid channels.

This purpose is achieved by the milling cutter according to claim 1, comprising a front end part and a back end part, the front end part comprising a disc-shaped cutter body having a front side and a rear side and configured to rotate in a rotary direction around a central axis, a number of insert seats arranged at an outer periphery of the disc-shaped cutter body, and a primary holding member extending around and along the central axis from the rear side of the disc-shaped cutter body and away from the disc-shaped cutter body. The milling cutter is characterized in that the back end part comprises a secondary holding member engaging the primary holding member when the front end part and the back end part are mounted to each other to form the milling cutter,
that the disc-shaped cutter body comprises a central cylindrical aperture extending coaxially with the central axis,
that the central cylindrical aperture comprises an inner cylindrical surface,
that the secondary holding member comprises an outer cylindrical surface provided on a front portion of the secondary holding member of the back end part, and
that the inner cylindrical surface is abutting the outer cylindrical surface in an abutting region axially located at least between the front side and the rear side in order to center the front end part and the back end part to each other when the front end part and the back end part are mounted to each other to form the milling cutter.

Adjacent to at least one insert seat, preferably to each insert seat, a chip room may be arranged as a part of the outer periphery.

By configuring the milling cutter in two parts, the manufacturing of the milling cutter is less complicated, in particular since the two parts may be manufactured separately from each other, and the manufacturing of one part may be performed without being disturbed by the other part. In particular, the manufacturing of the front end part and the disc-shaped cutter body may be facilitated since access to the insert seats, especially on the rear side, may be obtained while not being obstructed by a large rearwards extending holding part. This is so at least partly because of the front portion being configured to extend into the central cylindrical aperture meaning that the primary holding member may have a relatively short axial extension.

The mounting of the primary holding member of the front end part and the secondary holding member of the back end part to each other may comprise or form a mounting and locking interface. The locking interface may form a rigid and secure engagement between the front and part and the back end part. The locking interface is also torque transmitting, i.e. a torque from the machine spindle is transmitted from the back end part to the front end part via the locking interface arranged in the primary holding member and the secondary holding member. Thanks to this, no torque transmitting arrangement need to be placed in any of the central cylindrical aperture and the front portion of the secondary holding member. Thus, the inner cylindrical surface and the outer cylindrical surface can be manufactured easier and with a better precision.

Thanks to the fact that the inner cylindrical surface is abutting the outer cylindrical surface in an abutting region axially located between, or at least between, the front side and the rear side, the centering of the front end part on the back end part may be improved since the forces arising during the milling operation of the milling cutter may extend radially straight inwardly to the abutting region. The insert seats, and the cutting inserts, may thus be located at the same, or substantially the same, axial position as the abutting region which also makes it easier to achieve necessary tolerances when manufacturing the insert seats. Consequently, no oblique loads will exist that could stress the abutting region, meaning that the centering and the holding of the disc-shaped cutter body may remain stable and secure during the milling operation.

According to an embodiment of the invention, the primary holding member is integrally formed with the disc-shaped cutter body.

According to an embodiment of the invention, the secondary holding member is integrally formed with the back end part.

According to an embodiment of the invention, the inner cylindrical surface is an inner circular cylindrical surface, or inner continuously cylindrical surface. Thus, the inner cylindrical surface may be uninterrupted in a circumferential direction. In the same way, the outer cylindrical surface may be an outer circular cylindrical surface, or outer continuously cylindrical surface.

Thus, the outer cylindrical surface may be uninterrupted in a circumferential direction.

According to an embodiment of the invention, the inner cylindrical surface and the outer cylindrical surface may, especially at the abutting region, present a tolerance that is h6/H6.

According to the invention, liquid channels extend outwardly in the disc-shaped cutter body to a respective liquid outlet through the outer periphery of the disc-shaped cutter body, wherein the liquid channels are located between the front side and the rear side of the disc-shaped cutter body.

The liquid channels extend outwardly from the central cylindrical aperture. Thanks to this, in combination with the fact that the locking interface is arranged in the primary holding member and the secondary holding member, i.e. outside the central cylindrical aperture and the front portion of the secondary holding member, a leakage of liquid may be decreased in the area of the central cylindrical aperture and the front portion of the secondary holding member during transition of the liquid from the back end part and the front end part. As a result of that, no seals are required between the front end part and the back end part. In particular, the liquid channels may extend in parallel, or substantially in parallel, with the front side and the rear side.

The liquid channels may provide an efficient cooling of the disc-shaped cutter body and the cutting inserts, which contributes to a long lifetime of the milling cutter and the cutting inserts. The liquid channels, located between the front side and the rear side of the disc-shaped cutter body, may have a straight extension and may lie in a common plane, especially in an axial plane or a substantially axial plane.

In particular, each liquid channel may extend along a respective straight line from and through the outer periphery to and into the central cylindrical aperture of the disc-shaped cutter body, especially through the inner cylindrical surface. The liquid channels may thus be easily produced through drilling of a straight hole from the outer periphery to the central cylindrical aperture.

According to the invention, the inner cylindrical surface and the outer cylindrical surface are configured to form an annular channel extending around the front portion of the secondary holding member, wherein the liquid channels extend outwardly from the annular channel.

The annular channel may form a distribution space for delivering equal quantities of liquid to the liquid channels. The annular channel and the liquid channels may be located at a common axial position. The annular channel preferably divides the abutting region into two abutting sub-regions.

According to an embodiment of the invention, the annular channel comprises at least one of a primary annular groove extending through the inner cylindrical surface and a secondary annular groove extending through the outer cylindrical surface.

Thus, the annular channel may be formed by the primary annular groove, extending through the inner cylindrical surface of the disc-shaped cutter body, and the outer cylindrical surface. In this case the annular channel may have a semicircular cross-section. The primary annular groove preferably divides the abutting region into two abutting sub-regions.

Alternatively, the annular channel may be formed by the secondary annular groove, extending through the outer cylindrical surface of the front portion of the secondary holding member, and the inner cylindrical surface. Also in this case the annular channel may have a semicircular cross-section. The secondary annular groove preferably divides the abutting region into two abutting sub-regions.

According to a further alternative, the annular channel may be formed by the primary annular groove, extending through the inner cylindrical surface of the disc-shaped cutter body, and the secondary annular groove extending through the outer cylindrical surface of the front portion of the secondary holding member. The primary annular groove and the secondary annular groove may have the same axial position. The annular channel, formed by the primary annular groove and the secondary annular groove, may have a circular cross-section or a substantially circular cross-section. Also in this case, the annular channel preferably divides the abutting region into two abutting sub-regions.

According to an embodiment of the invention, the primary annular groove divides the inner cylindrical surface into two inner cylindrical sub-faces. Both of the two inner cylindrical sub-faces may abut the outer cylindrical surface.

According to an embodiment of the invention, the secondary annular groove divides the outer cylindrical surface into two outer cylindrical sub-faces. Both of the two outer cylindrical sub-faces may abut the inner cylindrical surface.

In case, the annular surface is formed by the primary annular groove and the secondary annular groove, the inner cylindrical sub-faces may abut a respective one of the outer cylindrical sub-faces.

According to an embodiment of the invention, the back end part encloses a liquid supply channel extending through the secondary holding member and comprising a central channel extending axially in the back end part, and a number of distribution channels extending outwardly from the central channel through the front portion of the secondary holding member to a respective intermediate outlet in order to permit liquid transport from the liquid supply channel to the liquid channels. The liquid supply channel of the back end part may thus contribute to an efficient supply of liquid to the intermediate outlets. The central channel and the distribution channels may have a circular cross-section. The cross-sectional area of the central channel is preferably equal to a sum of the cross-sectional areas of the distribution channels. The respective cross-sectional area is measured in a section perpendicular to a direction of extension of respective channel.

According to an embodiment of the invention, the at least one intermediate outlet adjoins the annular channel. The distribution channel, or distribution channels, may thus adjoin the annular channel permitting liquid to be supplied via the central channel and the distribution channels into the annular channel and from there via the liquid channels to the liquid outlets.

According to an embodiment of the invention, the primary holding member comprises an inner engagement region located at an axial distance from the rear side of the disc-shaped cutter body and from the central cylindrical aperture and cooperating with an outer engagement region of the secondary holding member.

The mounting and locking interference, mentioned above, may, at least partly, be achieved by means of the cooperation of the inner engagement region and the outer engagement region. The inner engagement region and the outer engagement region may have a respective central axis being coaxial with central axis of the disc-shaped cutter body.

According to an embodiment of the invention, the inner engagement region comprises an inner thread and the outer engagement region an outer thread, wherein the inner thread and the outer thread engage each other when the front end part and the back end part are mounted to each other to form the milling cutter.

According to an embodiment of the invention, the inner thread and the outer thread are configured as right handed threads, when the disc-shaped cutter body is configured as a right handed tool. Thus, the milling operation may have a tightening effect on the thread engagement.

According to an embodiment of the invention, the front portion of the secondary holding member comprises a front surface lying in a plane common to the front side of the disc-shaped cutter body when the front end part and the back end part are mounted to each other to form the milling cutter. The milling cutter may thus be used as an end mill cutter for forming a plane surface since no parts, except for the edges of the cutting inserts, need to protrude beyond the front side of the disc-shaped cutter body.

According to an embodiment of the invention, the disc-shaped cutter body comprises a number of cutting inserts provided in a respective one of the insert seats.

According to an embodiment of the invention, the liquid outlets are located in front of a respective one of the cutting inserts with regard to the rotary direction. The liquid supplied through the liquid outlets may thus contribute to a proper cooling of the cutting inserts and the workpiece, and to an efficient removal of chips from the milling region.

According to an embodiment of the invention, the liquid channels extend outwardly in a respective outward direction towards an active cutting edge of the respective cutting insert. Liquid supply to the region where the milling operation takes place may thus be achieved.

According to an embodiment of the invention, the insert seats comprise front insert seats, extending from the front side, and rear insert seats, extending from the rear side, wherein the front insert seats and the rear insert seats are arranged in an alternating order along the outer periphery of the disc-shaped cutter body. The front insert seats are arranged at a distance and separated from the rear side. The rear side insert seats are arranged at a distance and separated from the front side.

According to an embodiment of the invention, the primary holding member of the front end part comprises a major cylindrical zone and a minor transition zone, connecting the major cylindrical zone to the rear side of the disc-shaped cutter body, wherein the back end part has a largest outer diameter that is larger than a largest outer diameter of the major cylindrical zone.

Thanks to this difference of the outer diameters in combination with the fact that the milling cutter comprises a front end part and a back end part which are manufactured separately and assembled together, the back end part may be given a rear abutment surface large enough to achieve a good and stable connection with a holder or a machine. At the same time, the primary holding member may be given a relatively small diameter which facilitates easy manufacturing of the insert seats in the rear side of the disc-shaped cutter body. The relatively small diameter of the primary holding member may also offer the possibility to have an even smaller cutting diameter of the milling cutter, i.e. a smaller diameter of the disc-shaped cutter body.

### BRIEF DESCRIPTION OF THE DRAWINGS

The present invention is now to be explained more closely by means of the following description of preferred embodiments and with reference to the drawings attached hereto.
- Fig 1a: discloses a perspective rear view of a milling cutter according to a first embodiment of the invention.
- Fig 1b: discloses a perspective front view of the milling cutter in Fig 1a.
- Fig 1c: discloses a side view of the milling cutter in Fig 1a.
- Fig 1d: discloses an exploded side view of the milling cutter in Fig 1a.
- Fig 1e: discloses a rear view of a back end part of the milling cutter in Fig 1a.
- Fig 1f: discloses a rear view of a front end part of the milling cutter in Fig 1a.
- Fig 1g: discloses a sectional view through the back end part along the line Ig-Ig in Fig 1e.
- Fig 1h: discloses a sectional view through the front end part along the line Ih-lh in Fig 1f.
- Fig 1i: discloses a sectional view of the back end part and the front end part as shown in Figs 1g and 1h mounted to each other.
- Fig 2a: discloses a perspective rear view of a milling cutter according to a second embodiment of the invention.
- Fig 2b: discloses a perspective front view of the milling cutter in Fig 2a.
- Fig 2c: discloses a side view of the milling cutter in Fig 2a.
- Fig 2d: discloses an exploded side view of the milling cutter in Fig 2a.
- Fig 2e: discloses a rear view of a back end part of the milling cutter in Fig 2a.
- Fig 2f: discloses a rear view of a front end part of the milling cutter in Fig 2a.
- Fig 2g: discloses a sectional view through the back end part along the line Ilg-llg in Fig 2e.
- Fig 2h: discloses a sectional view through the front end part along the line Ilh-Ilh in Fig 2f.
- Fig 2i: discloses a sectional view of the back end part and the front end part as shown in Figs 2g and 2h mounted to each other.

### DETAILED DESCRIPTION OF VARIOUS EMBODIMENTS OF THE INVENTION

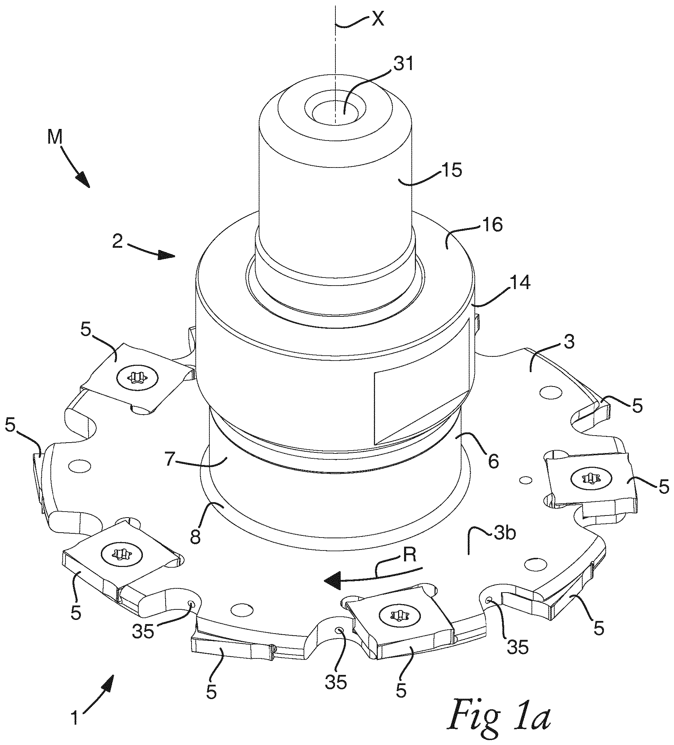

Figs 1a-1i refer to a first embodiment of a milling cutter M. The milling cutter M comprises two parts 1, 2, a front end part 1 and a back end part 2.

The front end part 1 comprises a disc-shaped cutter body 3 having a front side 3a and a rear side 3b. The front end part 1, with the disc-shaped cutter body 3, and the back end part 2 are configured to rotate in a rotary direction R around a central axis X. The central axis X thus forms a common central axis for the front end part 1 and the back end part 2.

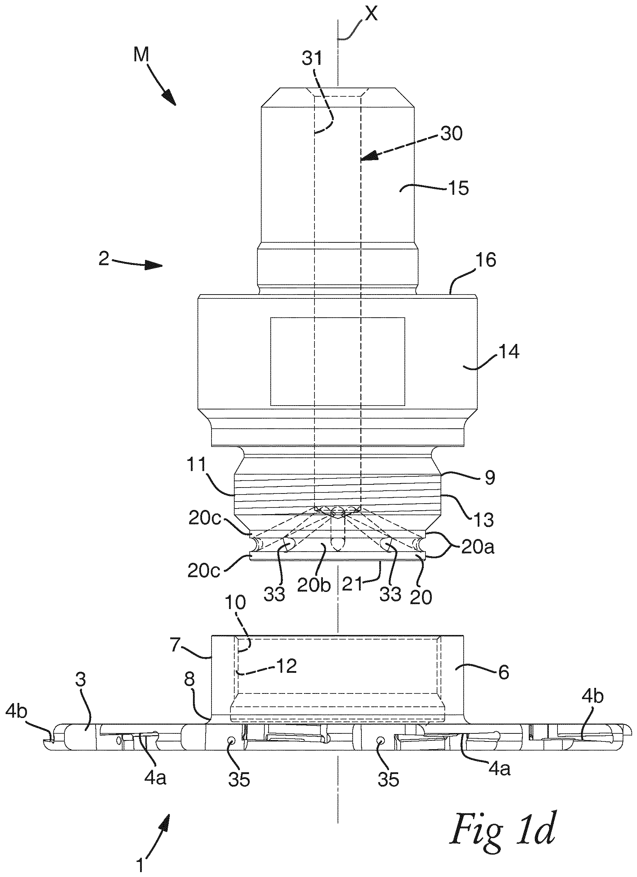

A number of insert seats 4a, 4b are arranged at an outer periphery of the disc-shaped cutter body 3, see Fig 1d. In the first embodiment, the disc-shaped cutter body 3 comprises ten insert seats 4a, 4b.

The insert seats 4a, 4b comprise front insert seats 4a, extending from the front side 3a, and rear insert seats 4b, extending from the rear side 3b, as can be seen in Fig 1d. In the first embodiment, there are five front insert seats 4a and five rear insert seats 4b. The front insert seats 4a and the rear insert seats 4b are arranged in an alternating order along the outer periphery of the disc-shaped cutter body 3.

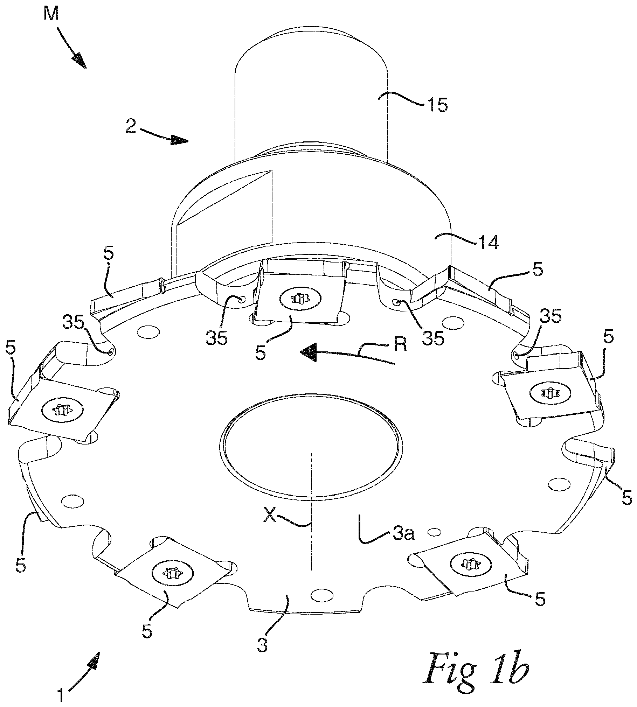

The disc-shaped cutter body 3 may comprises a number of cutting inserts 5 provided in a respective one of the insert seats 4a, 4b, as can be seen in Figs 1a and 1b.

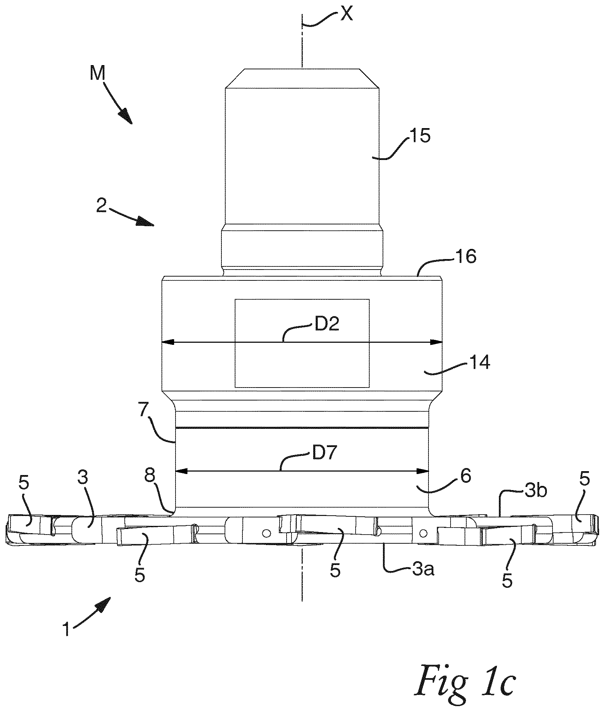

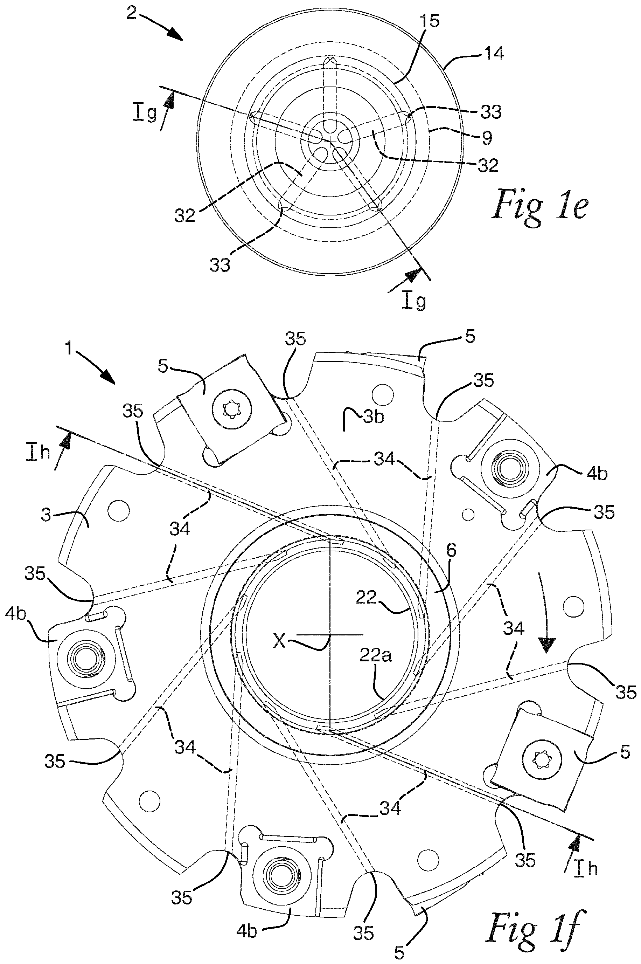

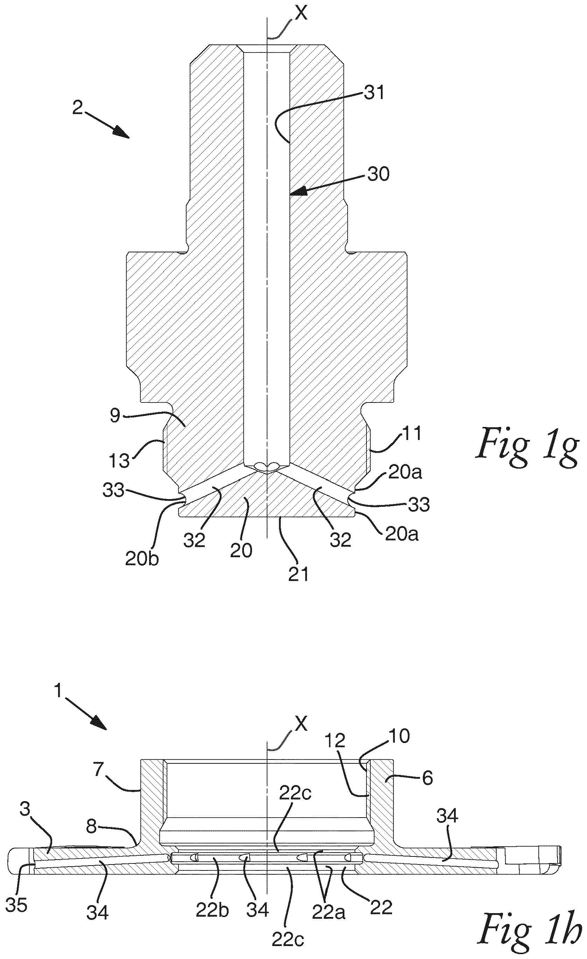

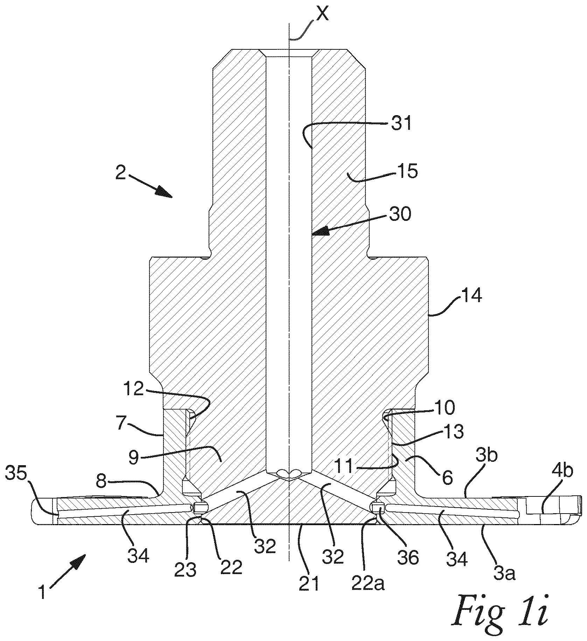

The front end part 1 also comprises a primary holding member 6 extending around and along the central axis X from the rear side 3b of the disc-shaped cutter body 3, see Figs 1d, 1f and 1 1h. The primary holding member 6 may be integrally formed with the disc-shaped cutter body 3.

The primary holding member 6 of the front end part 1 may comprise a major cylindrical zone 7 and a minor transition zone 8, connecting the major cylindrical zone 7 to the rear side 3b of the disc-shaped cutter body 3. The major cylindrical zone 7 has a largest outer diameter D7, see Fig 1c. The minor transition zone 8 may have a radius of curvature.

The back end part 2 comprises a secondary holding member 9 that may be integrally formed with the back end part 2, see Figs 1d, 1e and 1g. The secondary holding member 9 engages the primary holding member 6 when the front end part 1 and the back end part 2 are mounted to each other to form the milling cutter M, see Figs 1c and 1i.

As can be seen in Fig 1d, the primary holding member 6 may comprise an inner engagement region 10 located at an axial distance from the rear side 3b of the disc-shaped cutter body 3. The secondary holding member 9 may comprise an outer engagement region 11. The inner engagement region 10 cooperates with the outer engagement region 11 when the front end part 1 and the back end part 2 are mounted to each other to form a mounting and locking interface of the milling cutter M, see Fig 1i.

In the first embodiment, the inner engagement region 10 comprises an inner thread 12 and the outer engagement region 11 comprises an outer thread 13. The inner thread 12 and the outer thread 13 engage each other when the front end part 1 and the back end part 2 are mounted to each other to form the milling cutter M.

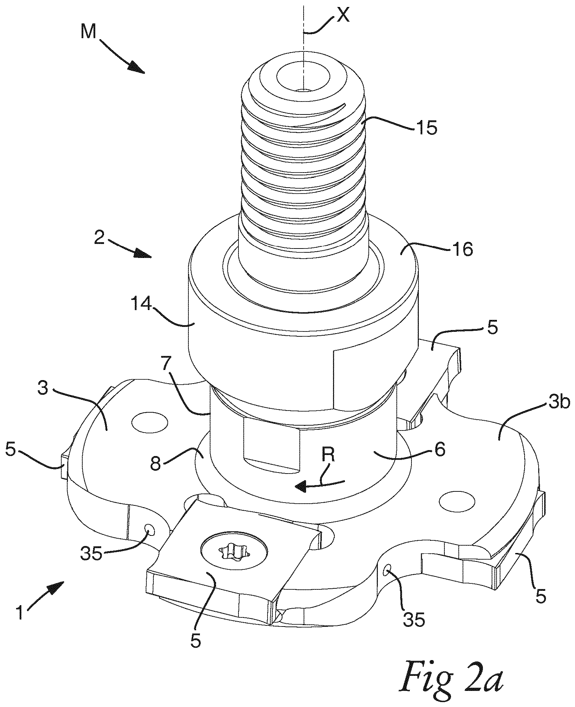

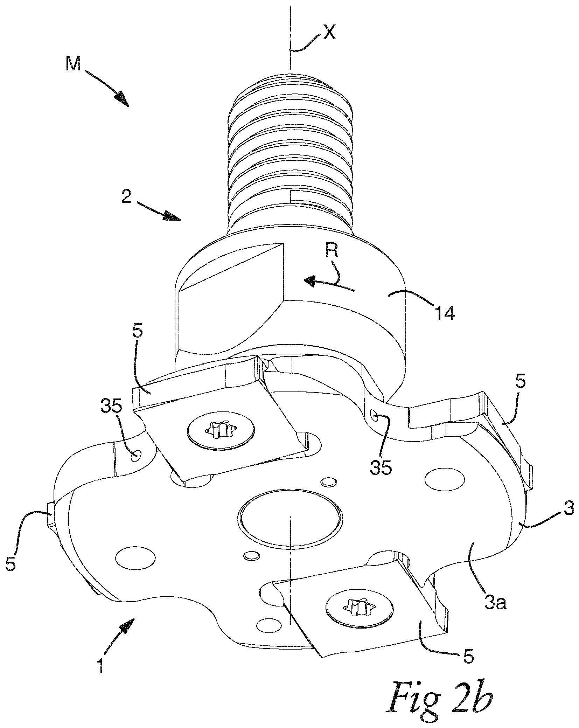

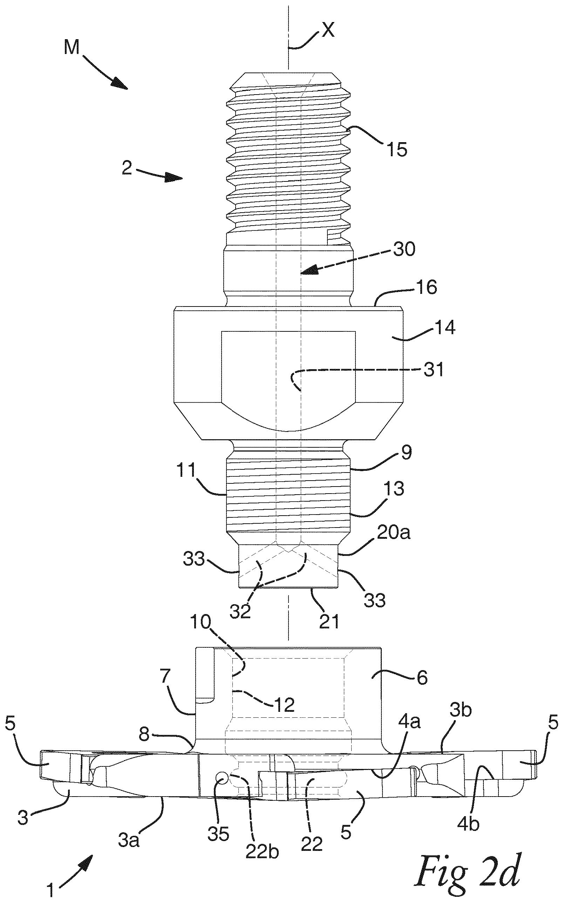

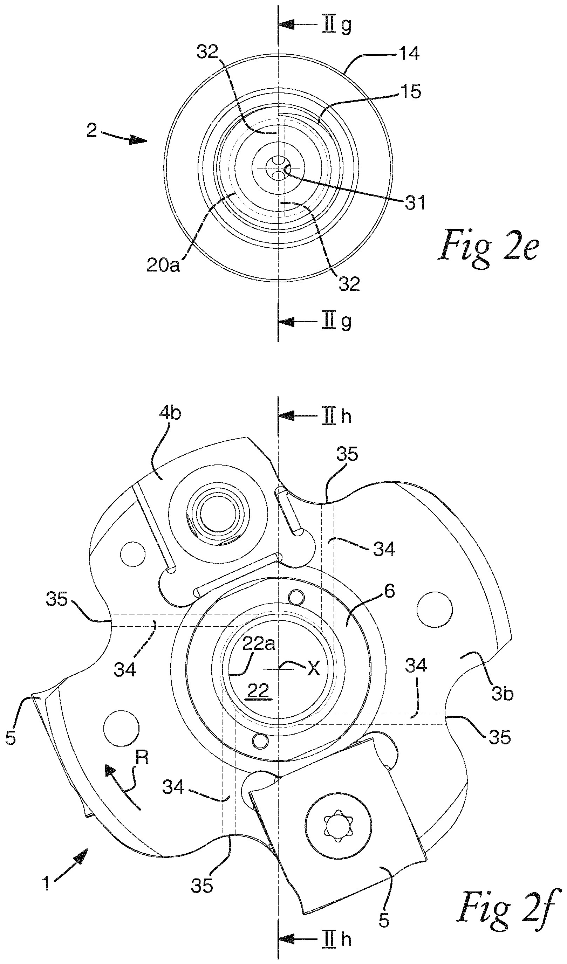

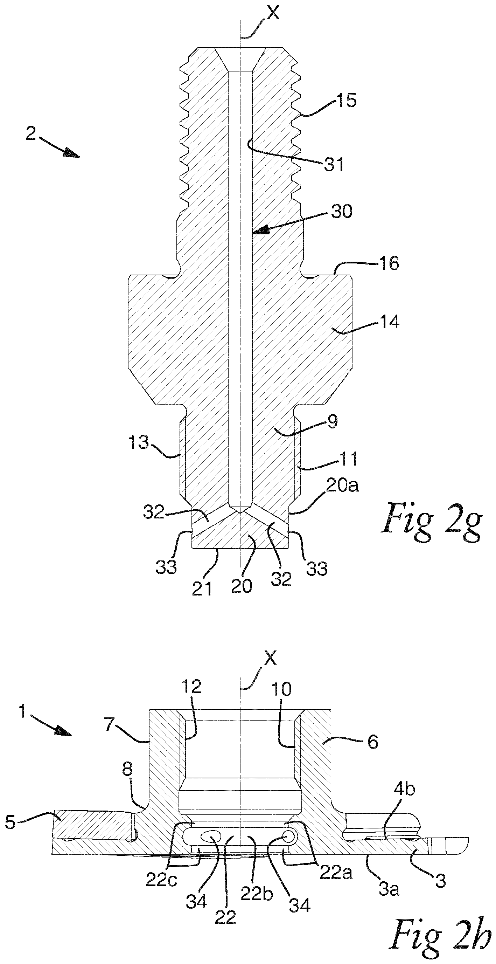

The back end part 2 may also comprise an intermediate section 14 located rearwards the outer engagement region 11, see Fig 1d. A fastening tap 15 may extend rearwards from the intermediate section 14 for permitting the milling cutter M to be held by a holder or a machine tool. The fastening tap 15 may have an outer thread as disclosed in Fig 2a. In the first embodiment, a rear abutment surface 16 is provided at a rear side of the intermediate section 14 and extends perpendicularly to the central axis X. The fastening tap 15 extends from the rear abutment surface 16. The rear abutment surface 16 may be large enough to obtain an accurate and stable connection with the holder or the machine.

In the first embodiment, the back end part 2 has a largest outer diameter D2 at the intermediate section 14. The largest outer diameter D2 is larger than the largest outer diameter D7 of the major cylindrical zone 7 of the primary holding member 6, see Fig 1c.

The secondary holding member 9 comprises a front portion 20 located in front of the outer engagement region 11 and forming the outermost end of the back end part 2, see Fig 1d.

In the first embodiment, the front portion 20 of the secondary holding member 9 comprises a front surface 21 lying in a plane common to the front side 3a of the disc-shaped cutter body 3 when the front end part 1 and the back end part 2 are mounted to each other to form the milling cutter M, see Fig 1i. The milling cutter M may thus be configured to be used as an end mill cutter for forming a plane surface since no parts, except for the edges of the cutting inserts 5, protrude beyond the front side 3a of the disc-shaped cutter body 3.

The disc-shaped cutter body 3 comprises a central cylindrical aperture 22 extending coaxially with the central axis X. The central cylindrical aperture 22 comprises an inner cylindrical surface 22a, see Figs 1f and 1h.

The secondary holding member 9 comprises an outer cylindrical surface 20a provided on the front portion 20 of the secondary holding member 9 of the back end part 2, see Figs 1d and 1g.

In the first embodiment, the inner cylindrical surface 22a is an inner circular cylindrical surface, or inner continuously cylindrical surface. The outer cylindrical surface 20a is an outer circular cylindrical surface, or outer circumferentially continuously cylindrical surface. Both the inner cylindrical surface 22a and the outer cylindrical surface 20a are thus uninterrupted in a circumferential direction.

The inner cylindrical surface 22a is abutting the outer cylindrical surface 20a in an abutting region 23, see Fig 1i. In the first embodiment, the abutting region 23 is axially located between the front side 3a and the rear side 3b of the disc-shaped cutter body 3. In particular, the abutting region 23 is located in the same axial position as the cutting inserts 5, i.e. between the most rearward position of the edge of the cutting inserts 5 in the rear insert seats 4b and the most forward position of the edge of the cutting inserts 5 in the front insert seats 4a. That means that no oblique loads, exerting stresses on the abutting region 23, may exist, and thus the centering and the holding of the disc-shaped cutter body 3 may remain stable and secure during the milling operation.

In the first embodiment, the inner cylindrical surface 22a and the outer cylindrical surface 20a present a tolerance of h6/H6 at the abutting region 23.

The abutting region 23 contributes to center the front end part 1 and the back end part 2 to each other when the front end part 1 and the back end part 2 are mounted to each other to form the milling cutter M, i.e. when the inner engagement region 10 and the outer engagement region 11 are in firm engagement with each other.

The milling cutter M may comprise a liquid supply system to be described below. The milling supply system may comprise a liquid supply channel 30 enclosed by the back end part 2 and extending through the secondary holding member 9 and the back end part. The liquid supply channel 30 comprises a central channel 31 and a number of distribution channels 32.

The central channel 31 extends axially, from a rear end of the back end part 2, through the back end part 2. In particular, the central channel 31 may extend through the fastening tap 15, the intermediate section 14 and partly through the secondary holding member 9 to a position close to the front portion 20, as can be seen in Fig 1g.

The distribution channels 32 extend outwardly from the central channel 31 through the front portion 20 of the secondary holding member 9 to a respective intermediate outlet 33.

The liquid supply system also comprises liquid channels 34, which extend outwardly in the disc-shaped cutter body 3 to a respective liquid outlet 35 through the outer periphery of the disc-shaped cutter body 3. The liquid outlets 35 are located in front of the respective cutting insert 5 with regard to the rotary direction R.

The liquid channels 34 are located between the front side 3a and the rear side 3b of the disc-shaped cutter body 3. In particular, the liquid channels 34 may have a straight extension and may lie in a common plane, especially an axial plane, or a substantially axial plane. Moreover, each liquid channel 34 may extend along a respective straight line from and through the outer periphery to and into the central cylindrical aperture 22 of the disc-shaped cutter body 3, especially through the inner cylindrical surface 22a, wherein the liquid channels 34 extend outwardly from the central cylindrical aperture 22.

Furthermore, the liquid supply system comprises an annular channel 36 extending around the front portion 20 of the secondary holding member 9, see Fig 1i. The liquid channels 34 extend outwardly from the annular channel 36, and the intermediate outlets 33 may adjoin the annular channel 36.

The annular channel 36 is formed or enclosed by the inner cylindrical surface 22a and the outer cylindrical surface 20a by means of a suitable configuration of the inner and outer cylindrical surfaces 22a and 22b. To that end, the annular channel 36 may comprise at least one of a primary annular groove 22b, see Fig 1h, extending through the inner cylindrical surface 22a and a secondary annular groove 20b, see Fig 1d, extending through the outer cylindrical surface 20a.

In the first embodiment, the annular channel 36 is formed by the primary annular groove 22b, extending through the inner cylindrical surface 22a of central cylindrical aperture 22 of the disc-shaped cutter body 3, and the secondary annular groove 20b extending through the outer cylindrical surface 20a of the front portion 20 of the secondary holding member 9. The primary annular groove 22b and the secondary annular groove 20b have in the first embodiment the same axial position. The annular channel 36, formed by the primary annular groove 22b and the secondary annular groove 20b, may have a circular cross-section or substantially circular cross-section.

In the first embodiment, the primary annular groove 22b divides the inner cylindrical surface 22a into two inner cylindrical sub-faces 22c, see Fig 1h, and the secondary annular groove 20b divides the outer cylindrical surface 20a into two outer cylindrical sub-faces 20c, see Fig 1d. Thus, the inner cylindrical sub-faces 22c may abut a respective one of the outer cylindrical sub-faces 20c.

In the first embodiment, a front inner cylindrical sub-face 22c abuts a front outer cylindrical sub-face 20c, which sub-faces 22c and 20c may be located axially close to the front side. A rear inner cylindrical sub-face 22c abuts a rear outer cylindrical sub-face 20c, which may be located axially close to the rear side 3b.

Liquid may thus be supplied through the milling cutter M by means of the liquid supply system described above. The liquid is then introduced into the liquid supply channel 30, i.e. into the central channel 31 and from there transported via the distribution channels 32 and the intermediate outlets 33 into the annular channel 36. From the annular channel 36, the liquid is transported via the liquid channels 34 to a respective one of the liquid outlets 35 through the outer periphery of the disc-shaped cutter body 3.

The liquid supplied by the liquid supply system may provide an efficient cooling of the disc-shaped cutter body 3 and the cutting inserts 5. The position of the liquid outlets 35 in front of the cutting inserts 5 contributes to an efficient cooling and to an efficient removal of chips produced during the milling operation. These effects contribute together to a long lifetime of the disc-shaped cutter body 3 and the cutting inserts 5.

Figs 2a-2i refer to a second embodiment of the milling cutter M. The same reference signs have been used for elements having the same or similar functions in all the embodiments disclosed.

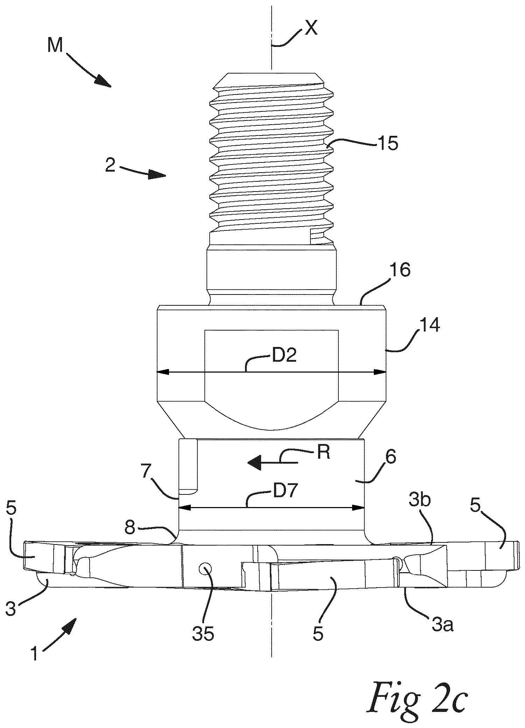

The second embodiment differs from the first embodiment in that it comprises only four insert seats 4a, 4b and in that the outer diameter of the disc-shaped-cutter body 3 is smaller than in the first embodiment. This smaller diameter of the disc-shaped cutter body 3 may be achieved thanks to the relatively small largest diameter D7 of the major cylindrical zone 7 of the primary holding member 6, see Fig 2c.

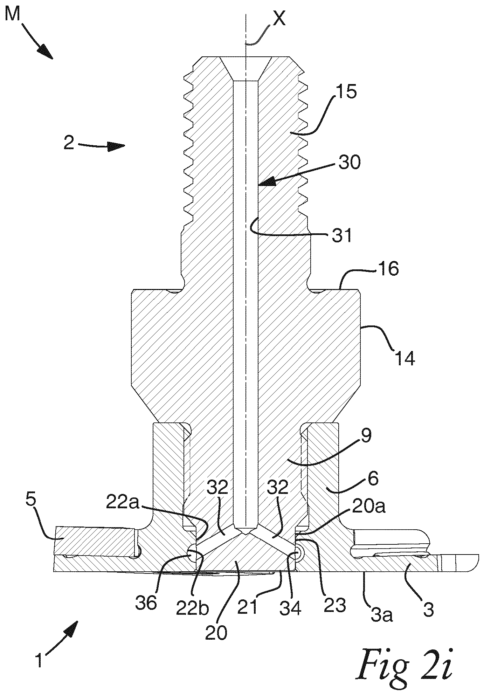

Furthermore, in the second embodiment the annular channel 36 is formed by the primary annular groove 22b, which extends through the inner cylindrical surface 22a of the disc-shaped cutter body 3, and by the outer cylindrical surface 20a of the front portion 20. In the second embodiment, the annular channel 36 may thus have a semicircular cross-section, see Fig 2i.

In a third embodiment not disclosed in the drawings, the annular channel 36 may be formed by the secondary annular groove 20b, which extends through the outer cylindrical surface 20a of the front portion 20, and by the inner cylindrical surface 22a of the disc-shaped cutter body 3. Also in the third embodiment, the annular channel 36 may have a semicircular cross-section.

It should be noted that the milling cutter may comprise another number of cutting inserts 5 than ten or four as comprised by the milling cutter of the above described second embodiments.

The invention is not limited to the embodiments disclosed but may be varied and modified within the scope of the following claims.

## Claims

1. A milling cutter (M) comprising a front end part (1) and a back end part (2),
the front end part (1) comprising
a disc-shaped cutter body (3) having a front side (3a) and a rear side (3b) and configured to rotate in a rotary direction (R) around a central axis (X),
a number of insert seats (4a, 4b) arranged at an outer periphery of the disc-shaped cutter body (3), and
a primary holding member (6) extending around and along the central axis (X) from the rear side (3b) of the disc-shaped cutter body (3) and away from the disc-shaped cutter body (3), wherein the back end part (2) comprises a secondary holding member (9) engaging the primary holding member (6) when the front end part (1) and the back end part (2) are mounted to each other to form the milling cutter (M),
wherein the disc-shaped cutter body (3) comprises a central cylindrical aperture (22) extending coaxially with the central axis (X),
wherein the central cylindrical aperture (22) comprises an inner cylindrical surface (22a),
wherein the secondary holding member (9) comprises an outer cylindrical surface (20a) provided on a front portion (20) of the secondary holding member (9) of the back end part (2), and
wherein the inner cylindrical surface (22a) is abutting the outer cylindrical surface (20a) in an abutting region (23) axially located at least between the front side (3a) and the rear side (3b) in order to center the front end part (1) and the back end part (1) to each other when the front end part (1) and the back end part (2) are mounted to each other to form the milling cutter (M),
wherein liquid channels (34) extend outwardly in the disc-shaped cutter body (3) to a respective liquid outlet (35) through the outer periphery of the disc-shaped cutter body (3), wherein the liquid channels (34) are located between the front side (3a) and the rear side (3b) of the disc-shaped cutter body (3),
**characterized in that**
the liquid channels (34) extend outwardly from the central cylindrical aperture (22), wherein the inner cylindrical surface (22a) and the outer cylindrical surface (20a) are configured to form an annular channel (36) extending around the front portion (20) of the secondary holding member (9), and wherein the liquid channels (34) extend outwardly from the annular channel (36).

2. The milling cutter (M) according to claim 1, wherein the annular channel (36) comprises at least one of a primary annular groove (22b) extending through the inner cylindrical surface (22a) and a secondary annular groove (20b) extending through the outer cylindrical surface (20a).

3. The milling cutter (M) according to claim 2, wherein the primary annular groove (22b) divides the inner cylindrical surface (22a) into two inner cylindrical sub-faces (22c).

4. The milling cutter (M) according to any one of claims 2 and 3, wherein the secondary annular groove (20b) divides the outer cylindrical surface (20a) into two outer cylindrical sub-faces (20c).

5. The milling cutter (M) according to any one of the preceding claims, wherein the back end part (2) encloses a liquid supply channel (30) extending through the secondary holding member (9) and comprising a central channel (31) extending axially in the back end part (2), and a number of distribution channels (32) extending outwardly from the central channel (31) through the front portion (20) of the secondary holding member (9) to a respective intermediate outlet (33) in order to permit liquid transport from the liquid supply channel (30) to the liquid channels (34).

6. The milling cutter (M) according to claim 5, wherein the at least one intermediate outlet (33) adjoins the annular channel (36).

7. The milling cutter (M) according to any one of the preceding claims, wherein the primary holding member (6) comprises an inner engagement region (10) located at an axial distance from the rear side (3b) of the disc-shaped cutter body (3) and from the central cylindrical aperture (22) and cooperating with an outer engagement region (11) of the secondary holding member (9).

8. The milling cutter (M) according to claim 7, wherein the inner engagement region (10) comprises an inner thread (12) and the outer engagement region (11) an outer thread (13), and wherein the inner thread (12) and the outer thread (13) engage each other when the front end part (1) and the back end part (2) are mounted to each other to form the milling cutter.

9. The milling cutter (M) according to any one of the preceding claims, wherein the front portion (13) of the secondary holding member (9) comprises a front surface (21) lying in a plane common to the front side (3a) of the disc-shaped cutter body (3) when the front end part (1) and the back end part (2) are mounted to each other to form the milling cutter.

10. The milling cutter (M) according to any one of the preceding claims, wherein the disc-shaped cutter body (3) comprises a number of cutting inserts (5) provided in a respective one of the insert seats (4a, 4b).

11. The milling cutter (M) according to claim 10, wherein the liquid outlets are located in front of a respective one of the cutting inserts with regard to the rotary direction (R).

12. The milling cutter (M) according to claim 11, wherein the liquid channels extend outwardly in a respective outward direction towards an active cutting edge of the respective cutting insert.

13. The milling cutter (M) according to any one of the preceding claims, wherein the insert seats (4a, 4b) comprise front insert seats (4a), extending from the front side (3a), and rear insert seats (4b), extending from the rear side (3b), and wherein the front insert seats (4a) and the rear insert seats (4b) are arranged in an alternating order along the outer periphery of the disc-shaped cutter body (3).

14. The milling cutter (M) according to any one of the preceding claims, wherein the primary holding member (6) of the front end part (1) comprises a major cylindrical zone (7) and a minor transition zone (8), connecting the major cylindrical zone (7) to the rear side (3b) of the disc-shaped cutter body (3), and wherein the back end part (2) has a largest outer diameter (D2) that is larger than a largest outer diameter (D7) of the major cylindrical zone (7).

## Patentansprüche

1. Fräser (M) mit einem vorderen Endteil (1) und einem hinteren Endteil (2),
wobei das vordere Endteil (1) Folgendes aufweist:
einen scheibenförmigen Fräskörper (3) mit einer Vorderseite (3a) und einer Rückseite (3b), der so eingerichtet ist, dass er sich in einer Drehrichtung (R) um eine zentrale Achse (X) dreht, eine Anzahl von Einsatzsitzen (4a, 4b), die an einem äußeren Umfang des scheibenförmigen Schneidkörpers (3) angeordnet sind, und
ein primäres Halteelement (6), das sich um und entlang der zentralen Achse (X) von der Rückseite (3b) des scheibenförmigen Fräskörpers (3) und von dem scheibenförmigen Fräskörper (3) weg erstreckt, wobei der hintere Endteil (2) ein sekundäres Halteelement (9) enthält, das mit dem primären Halteelement (6) in Eingriff steht, wenn der vordere Endteil (1) und der hintere Endteil (2) aneinander montiert sind, um den Fräser (M) auszubilden,
wobei der scheibenförmige Fräskörper (3) eine zentrale zylindrische Öffnung (22) aufweist, die sich koaxial zur Mittelachse (X) erstreckt,
wobei die zentrale zylindrische Öffnung (22) eine zylindrische Innenfläche (22a) aufweist,
wobei das sekundäre Halteelement (9) eine äußere zylindrische Oberfläche (20a) aufweist,
die auf einem vorderen Teil (20) des sekundären Halteelements (9) des hinteren Endteils (2) vorgesehen ist, und
wobei die innere zylindrische Fläche (22a) an die äußere zylindrische Fläche (20a) in einem Anschlagbereich (23) anstößt, der axial wenigstens zwischen der vorderen Seite (3a) und der hinteren Seite (3b) angeordnet ist, um das vordere Endteil (1) und das hintere Endteil (1) zueinander zu zentrieren, wenn das vordere Endteil (1) und das hintere Endteil (2) aneinander montiert sind, um den Fräser (M) auszubilden,
wobei sich in dem scheibenförmigen Fräskörper (3) Flüssigkeitskanäle (34) nach außen zu einem jeweiligen Flüssigkeitsauslass (35) durch den äußeren Umfang des scheibenförmigen Fräskörpers (3) erstrecken, wobei die Flüssigkeitskanäle (34) zwischen der Vorderseite (3a) und der Rückseite (3b) des scheibenförmigen Fräskörpers (3) angeordnet sind,
**dadurch gekennzeichnet, dass** sich die Flüssigkeitskanäle (34) von der zentralen zylindrischen Öffnung (22) nach außen erstrecken, wobei die innere zylindrische Oberfläche (22a) und die äußere zylindrische Oberfläche (20a) so eingerichtet sind, dass sie einen ringförmigen Kanal (36) ausbilden, der sich um den vorderen Abschnitt (20) des sekundären Halteelements (9) erstreckt, und wobei sich die Flüssigkeitskanäle (34) von dem ringförmigen Kanal (36) nach außen erstrecken.

2. Fräser (M) nach Anspruch 1, wobei der ringförmige Kanal (36) wenigstens eine von einer primären ringförmigen Nut (22b), die sich durch die innere zylindrische Oberfläche (22a) erstreckt, und einer sekundären ringförmigen Nut (20b), die sich durch die äußere zylindrische Oberfläche (20a) erstreckt, aufweist.

3. Fräser (M) nach Anspruch 2, wobei die primäre ringförmige Nut (22b) die innere zylindrische Fläche (22a) in zwei innere zylindrische Teilflächen (22c) unterteilt.

4. Fräser (M) nach einem der Ansprüche 2 und 3, wobei die sekundäre ringförmige Nut (20b) die äußere zylindrische Fläche (20a) in zwei äußere zylindrische Teilflächen (20c) unterteilt.

5. Fräser (M) nach einem der vorhergehenden Ansprüche, wobei der hintere Endteil (2) einen Flüssigkeitszufuhrkanal (30) einschließt, der sich durch das sekundäre Halteelement (9) erstreckt und einen zentralen Kanal (31) enthält, der sich im hinteren Endteil (2) axial erstreckt, sowie eine Anzahl von Verteilungskanälen (32), die sich vom zentralen Kanal (31) nach außen durch den vorderen Teil (20) des sekundären Halteelements (9) zu einem jeweiligen Zwischenauslass (33) erstrecken, um einen Flüssigkeitstransport vom Flüssigkeitszufuhrkanal (30) zu den Flüssigkeitskanälen (34) zu ermöglichen.

6. Fräser (M) nach Anspruch 5, wobei sich der wenigstens eine Zwischenauslass (33) an den Ringkanal (36) anschließt.

7. Fräser (M) nach einem der vorhergehenden Ansprüche, wobei das primäre Halteelement (6) einen inneren Eingriffsbereich (10) aufweist, der in axialem Abstand von der Rückseite (3b) des scheibenförmigen Fräserkörpers (3) und von der zentralen zylindrischen Öffnung (22) angeordnet ist und mit einem äußeren Eingriffsbereich (11) des sekundären Halteelements (9) zusammenwirkt.

8. Fräser (M) nach Anspruch 7, wobei der innere Eingriffsbereich (10) ein Innengewinde (12) und der äußere Eingriffsbereich (11) ein Außengewinde (13) aufweist, und wobei das Innengewinde (12) und das Außengewinde (13) ineinander eingreifen, wenn der vordere Endteil (1) und der hintere Endteil (2) aneinander montiert sind, um den Fräser auszubilden.

9. Fräser (M) nach einem der vorhergehenden Ansprüche, wobei der vordere Abschnitt (13) des sekundären Halteelements (9) eine vordere Fläche (21) aufweist, die in einer gemeinsamen Ebene mit der Vorderseite (3a) des scheibenförmigen Fräserkörpers (3) liegt, wenn das vordere Endteil (1) und das hintere Endteil (2) aneinander montiert sind, um den Fräser auszubilden.

10. Fräser (M) nach einem der vorhergehenden Ansprüche, wobei der scheibenförmige Fräserkörper (3) eine Anzahl von Schneideinsätzen (5) aufweist, die in einem jeweiligen der Einsatzsitze (4a, 4b) vorgesehen sind.

11. Fräser (M) nach Anspruch 10, wobei die Flüssigkeitsauslässe in Bezug auf die Drehrichtung (R) vor einem jeweiligen der Schneideinsätze angeordnet sind.

12. Fräser (M) nach Anspruch 11, wobei sich die Flüssigkeitskanäle in einer jeweiligen Auswärtsrichtung nach außen zu einer aktiven Schneidkante des jeweiligen Schneideinsatzes hin erstrecken.

13. Fräser (M) nach einem der vorhergehenden Ansprüche, wobei die Einsatzsitze (4a, 4b) vordere Einsatzsitze (4a), die sich von der Vorderseite (3a) aus erstrecken, und hintere Einsatzsitze (4b), die sich von der Rückseite (3b) aus erstrecken, aufweisen, und wobei die vorderen Einsatzsitze (4a) und die hinteren Einsatzsitze (4b) in abwechselnder Reihenfolge entlang des äußeren Umfangs des scheibenförmigen Fräskörpers (3) angeordnet sind.

14. Fräser (M) nach einem der vorhergehenden Ansprüche, wobei das primäre Halteelement (6) des vorderen Endteils (1) einen zylindrischen Hauptbereich (7) und einen kleineren Übergangsbereich (8) aufweist, der den zylindrischen Hauptbereich (7) mit der Rückseite (3b) des scheibenförmigen Fräserkörpers (3) verbindet, und wobei das hintere Endteil (2) einen größten Außendurchmesser (D2) aufweist, der größer ist als ein größter Außendurchmesser (D7) des zylindrischen Hauptbereichs (7).

## Revendications

1. Fraise (M) comprenant une partie d'extrémité avant (1) et une partie d'extrémité arrière (2),
la partie d'extrémité avant (1) comprenant
un corps de fraise en forme de disque (3) présentant un côté avant (3a) et un côté arrière (3b) et étant configuré pour être entraîné en rotation selon une sens de rotation (R) autour d'un axe central (X),
un certain nombre de sièges de plaquette (4a, 4b) agencés au niveau d'une périphérie extérieure du corps de fraise en forme de disque (3), et
un élément de tenue principal (6) s'étendant autour et le long de l'axe central (X) depuis le côté arrière (3b) du corps de fraise en forme de disque (3) et vers l'opposé du corps de fraise en forme de disque (3),
où la partie d'extrémité arrière (2) comprend un élément de tenue secondaire (9) engageant l'élément de tenue principal (6) lorsque la partie d'extrémité avant (1) et la partie d'extrémité arrière (2) sont montées l'une sur l'autre pour former la fraise (M),
où le corps de fraise en forme de disque (3) comprend une ouverture cylindrique centrale (22) s'étendant de manière coaxiale avec l'axe central (X),
où l'ouverture cylindrique centrale (22) comprend une surface cylindrique intérieure (22a),
où l'élément de tenue secondaire (9) comprend une surface cylindrique extérieure (20a) prévue sur une portion avant (20) de l'élément de tenue secondaire (9) de la partie d'extrémité arrière (2), et
où la surface cylindrique intérieure (22a) est en butée sur la surface cylindrique extérieure (20a) dans une région de butée (23) axialement située au moins entre le côté avant (3a) et le côté arrière (3b) de sorte à centrer la partie d'extrémité avant (1) et la partie d'extrémité arrière (2) l'une par rapport à l'autre lorsque la partie d'extrémité avant (1) et la partie d'extrémité arrière (2) sont montées l'une sur l'autre pour former la fraise (M),
où des canaux à liquide (34) s'étendent vers l'extérieur dans le corps de fraise en forme de disque (3) jusqu'à une sortie de liquide respective (35) à travers la périphérie extérieure du corps de fraise en forme de disque (3), où les canaux à liquide (34) sont situés entre le côté avant (3a) et le côté arrière (3b) du corps de fraise en forme de disque (3),
**caractérisée en ce que**
les canaux à liquide (34) s'étendent vers l'extérieur depuis l'ouverture cylindrique centrale (22), où la surface cylindrique intérieure (22a) et la surface cylindrique extérieure (20a) sont configurées pour former un canal annulaire (36) s'étendant autour de la portion avant (20) de l'élément de tenue secondaire (9), et où les canaux à liquide (34) s'étendent vers l'extérieur depuis le canal annulaire (36).

2. Fraise (M) selon la revendication 1, dans laquelle le canal annulaire (36) comprend au moins l'une d'une rainure annulaire principale (22b) s'étendant à travers la surface cylindrique intérieure (22a) et d'une rainure annulaire secondaire (20b) s'étendant à travers la surface cylindrique extérieure (20a).

3. Fraise (M) selon la revendication 2, dans laquelle la rainure annulaire principale (22b) divise la surface cylindrique intérieure (22a) en deux sous-faces cylindriques intérieures (22c).

4. Fraise (M) selon l'une quelconque des revendications 2 et 3, dans laquelle la rainure annulaire secondaire (20b) divise la surface cylindrique extérieure (20a) en deux sous-faces cylindriques extérieures (20c).

5. Fraise (M) selon l'une quelconque des revendications précédentes, dans laquelle la partie d'extrémité arrière (2) enferme un canal d'alimentation en liquide (30) s'étendant à travers l'élément de tenue secondaire (9) et comprenant un canal central (31) s'étendant axialement dans la partie d'extrémité arrière (2), et un certain nombre de canaux de distribution (32) s'étendant vers l'extérieur depuis le canal central (31) à travers la portion avant (20) de l'élément de tenue secondaire (9) jusqu'à une sortie intermédiaire respective (33) de sorte à permettre un transport de liquide du canal d'alimentation en liquide (30) jusqu'aux canaux à liquide (34).

6. Fraise (M) selon la revendication 5, dans laquelle la au moins une sortie intermédiaire (33) est contiguë avec le canal annulaire (36).

7. Fraise (M) selon l'une quelconque des revendications précédentes, dans laquelle l'élément de tenue principal (6) comprend une région d'engagement intérieure (10) située à une certaine distance axiale du côté arrière (3b) du corps de fraise en forme de disque (3) et de l'ouverture cylindrique centrale (22) et coopérant avec une région d'engagement extérieure (11) de l'élément de tenue secondaire (9).

8. Fraise (M) selon la revendication 7, dans laquelle la région d'engagement intérieure (10) comprend un filetage intérieur (12) et la région d'engament extérieure (11) un filetage extérieur (13), et où le filetage intérieur (12) et le filetage extérieur (13) s'engagent l'un avec l'autre lorsque la partie d'extrémité avant (1) et la partie d'extrémité arrière (2) sont montées l'une sur l'autre pour former la fraise.

9. Fraise (M) selon l'une quelconque des revendications précédentes, dans laquelle la portion avant (13) de l'élément de tenue secondaire (9) comprend une surface avant (21) se trouvant dans un plan commun au côté avant (3a) du corps de fraise en forme de disque (3) lorsque la partie d'extrémité avant (1) et la partie d'extrémité arrière (2) sont montées l'une sur l'autre pour former la fraise.

10. Fraise (M) selon l'une quelconque des revendications précédentes, dans laquelle le corps de fraise en forme de disque (3) comprend un certain nombre de plaquettes de coupe (5) prévues dans un siège respectif parmi les sièges de plaquette (4a, 4b).

11. Fraise (M) selon la revendication 10, dans laquelle les sorties de liquide sont situées devant une plaquette respective parmi les plaquettes de coupe par rapport au sens de rotation (R).

12. Fraise (M) selon la revendication 11, dans laquelle les canaux à liquide s'étendent vers l'extérieur suivant une direction vers l'extérieur respective vers une arête de coupe active de la plaquette de coupe respective.

13. Fraise (M) selon l'une quelconque des revendications précédentes, dans laquelle les sièges de plaquette (4a, 4b) comprennent des sièges de plaquette avant (4a), s'étendant depuis le côté avant (3a), et des sièges de plaquette arrière (4b), s'étendant depuis le côté arrière (3b), et où les sièges de plaquette avant (4a) et les sièges de plaquette arrière (4b) sont agencés suivant un ordre d'alternance le long de la périphérie extérieure du corps de fraise en forme de disque (3).

14. Fraise (M) selon l'une quelconque des revendications précédentes, dans laquelle l'élément de tenue principal (6) de la partie d'extrémité avant (1) comprend une zone cylindrique majeure (7) et une zone de transition mineure (8), reliant la zone cylindrique majeure (7) au côté arrière (3b) du corps de fraise en forme de disque (3), et où la partie d'extrémité arrière (2) présente un diamètre extérieur le plus important (D2) qui est supérieur à un diamètre extérieur le plus important (D7) de la zone cylindrique majeure (7).
